Europäisches Patentamt

European Patent Office

Office européen des brevets

(19)

(11) Veröffentlichungsnummer : **0 233 640 B1**

(12) **EUROPÄISCHE PATENTSCHRIFT**

(45) Veröffentlichungstag der Patentschrift :
03.07.91 Patentblatt 91/27

(51) Int. Cl.$^5$ : **F16G 13/06**

(21) Anmeldenummer : **87102285.1**

(22) Anmeldetag : **18.02.87**

(54) **Rollenkette für Kettentriebe.**

(30) Priorität : **19.02.86 DE 3605341**
**07.04.86 US 848999**

(43) Veröffentlichungstag der Anmeldung :
**26.08.87 Patentblatt 87/35**

(45) Bekanntmachung des Hinweises auf die
Patenterteilung :
**03.07.91 Patentblatt 91/27**

(84) Benannte Vertragsstaaten :
**BE DE FR GB IT NL SE**

(56) Entgegenhaltungen :
**WO-A-86/01270**
**DE-A- 3 434 516**
**DE-B- 1 299 959**

(56) Entgegenhaltungen :
**DE-C- 167 180**
**DE-C- 641 805**
**GB-A- 217 483**
**GB-A- 317 467**
**GB-A- 426 302**
**US-A- 2 231 379**

(73) Patentinhaber : **ROHLOFF, Bernhard**
**Grillparzerstrasse 29**
**W-3500 Kassel (DE)**

(72) Erfinder : **ROHLOFF, Bernhard**
**Grillparzerstrasse 29**
**W-3500 Kassel (DE)**

(74) Vertreter : **Freiherr von Schorlemer, Reinfried,**
**Dipl.-Phys.**
**Patentanwalt Brüder-Grimm-Platz 4**
**W-3500 Kassel (DE)**

## Beschreibung

Die Erfindung betrifft eine Rollenkette für Kettengetriebe mit einer Vielzahl von abwechselnd und hintereinander angeordneten Innen- und Außengliedern, wobei die Außenglieder wenigstens je zwei Außenlaschen enthalten, die durch wenigstens zwei an ihnen befestigten Bolzen miteinander verbunden sind, wobei die Innenglieder wenigstens je zwei Innenlaschen mit zwei Paaren von korral ausgerichteten Bolzenlöchern und mit zwischen diesen angeordneten Bolzenlagern aufweisen, die aus drehfest mit den Innenlaschen verbundenen, die Bolzen nur teilweise umgreifenden und bei gestreckter Lage der Rollenkette jeweils auf den den benachbarten Außengliedern zugewandten Seiten der Bolzen angeordneten Lagerschalen und ihnen gegenüberliegenden, zwischen den Innenlaschen angeordneten, die Bolzen ebenfalls nur teilweise umgreifenden Klemmstücken bestehen, die zusammen mit den Lagerschalen die Bolzen insgesamt auf Umfangabschnitten von weniger als 360° umgreifen, so daß sie in Umfangsrichtung relativ zu den Lagerschalen beweglich sind, wobei die Bolzenlager von zwischen den Innenlaschen lose drehbar angeordneten Rollen umgeben sind und wobei zur gelenkigen Verbindung der Außenglieder mit je zwei benachbarten Innengliedern der eine Bolzen jedes Außenglieds eines der Paare von Bolzenlöchern und das zugeordnete Bolzenlager eines der benachbarten Innenglieder und der andere Bolzen jedes Außenglieds eines der Paare von Bolzenlöchern und das zugeordnete Bolzenlager des anderen der benachbarten Innenglieder durchragt.

Bei bereits vorgeschlagenen Rollenketten dieser Art (vgl. die nicht vorveröffentlichte WO-A-86/01270), die sich insbesondere für die Antriebe von Mottorrädern oder Fahrrädern mit oder ohne Kettenschaltung eignen, müssen bei höchstem Wirkungsgrad und leichtgewichtiger, robuster Konstruktion hohe Kräfte über große Achsabstände übersetzt werden können. Bei Kettenräderwechselgetrieben (im folgenden Kettenschaltung genannt) ist die Kette zugleich Schaltorgan. Ihre Gelenke sind so ausgeführt, daß sich die Bolzen der Außenglieder in von zusätzlichen Rollen umgebenen Bolzenlagern drehen, die aus an den Innenlaschen befestigten Lagerschalen und mit den Bolzen formschlüssig verbundenen, lagerschalenförmigen Klemmstücken bestehen.

Obwohl derartige Rollenketten im Vergleich zu herkömmlichen, bis heute ausschließlich eingesetzten Rollenketten eine Vielzahl von Vorteilen aufweisen, sind sie noch nicht in jeder Hinsicht optimal. Dies gilt insbesondere wegen der formschlüssigen Verbindung zwischen den Bolzen und den Klemmstücken, da hierdurch die Herstellungskosten erhöht und die beim Verpacken und beim Vorhandensein kleiner Ritzel erwünschten großen Auslenkwinkel zwischen den Innen- und Außengliedern begrenzt werden.

Der Erfindung liegt die Aufgabe zugrunde, die Rollenkette der eingangs bezeichneten Art dahingehend zu verbessern, daß sie einfacher herstellbar ist und große Auslenkwinkel zwischen den Innen- und Außengliedern zuläßt.

Zur Lösung dieser Aufgabe sind bei der eingangs bezeichneten Rollenkette die zwischen den Bolzen und den Rollen angeordneten Klemmstücke in Umfangsrichtung zwischen den gegenüberliegenden Kanten der Lagerschalen relativ zu den Bolzen beweglich.

Die erfindungsgemäße Bewegbarkeit der Klemmstücke auf den Bolzen kann z.B. dadurch erzielt werden, daß die Klemmstücke entweder völlig bei bzw. lose auf die Bolzen aufgelegt oder kraftschlüssig mit den Außengliedern oder mit zwischen diesen und den Innengliedern angeordneten Reibscheiben verbunden werden. Dadurch ist es möglich, die erfindungsgemäße Rollenkette auch über extrem kleine Ritzel laufen zu lassen oder die Außen- und Innenglieder für Verpackungszwecke um nahezu 180° zueinander zu verschwenken, ohne den Umfangswinkel der Klemmstücke verringern zu müssen.

Die Erfindung wird nachfolgend in Verbindung mit der beiliegenden Zeichnung an Ausführungsbeispielen näher erläutert. Es zeigen :

Fig. 1 einen Schnitt durch ein Bolzenlagergelenk der erfindungsgemäßen Rollenkette ;

Fig. 2 eine teilweise geschnittene Draufsicht auf das Bolzenlagergelenk nach Fig. 1 ;

Fig. 3 eine Explosionsdarstellung des Bolzenlagergelenks nach Fig. 1 und 2 ;

Fig. 4 und 5 schematisch die Funktionsweise des Bolzenlagergelenks nach Fig. 1 bis 3 ;

Fig. 6 und 7 Ansichten entsprechend Fig. 2 von zwei weiteren Ausführungsbeispielen eines Klemmstücks der erfindungsgemäßen Rollenhette ;

Fig. 8 eine der Fig. 1 entsprechende Ansicht der Bolzenlagergelenke nach Fig. 6 und 7 ;

Fig. 9 zwei bevorzugte Ausführungsformen der Bolzenlöcher in den Innenlaschen der Bolzenlagergelenke ;

Fig. 10 eine Explosionsdarstellung eines erfindungsgemäß mit Dichtscheiben abgedichteten Bolzenlagergelenks für eine Rollenkette ;

Fig. 11 einen Fig. 1 entsprechenden Schnitt durch das Bolzenlagergelenk nach Fig. 10 im zusammengesetzten Zustand ; und

Fig. 12 einen Vollschnitt durch die Mittelebene des Bolzengelenks nach Fig. 11, jedoch in einer zur Schnittebene nach Fig. 11 senkrechten Ebene.

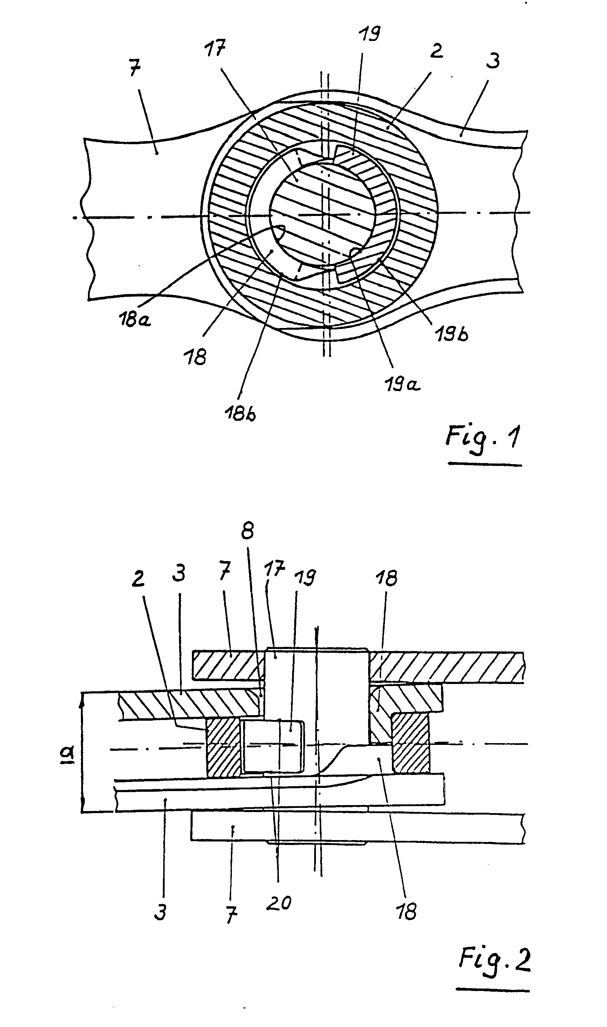

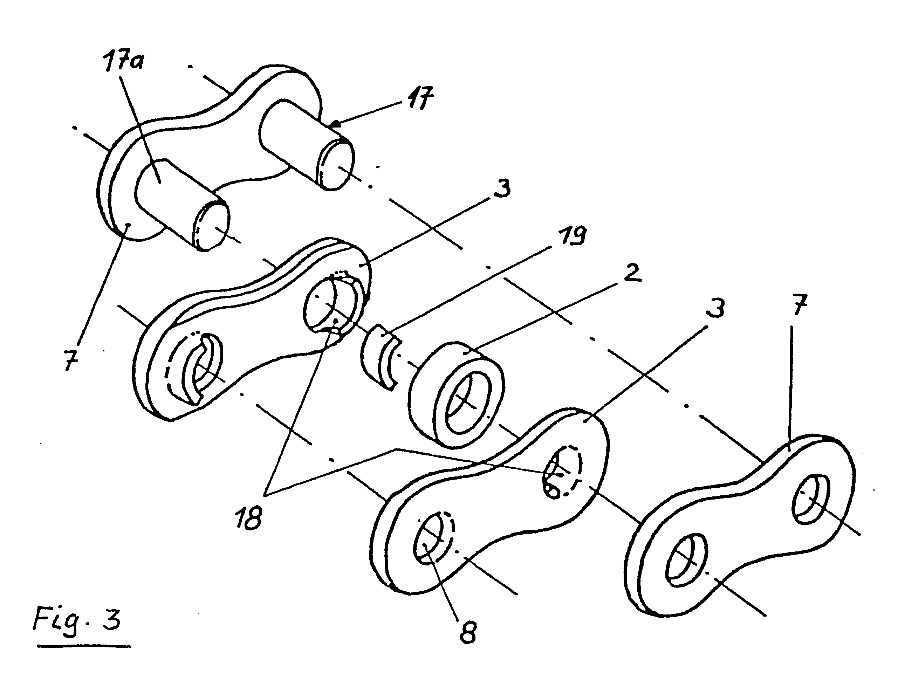

Nach Fig. 1 und 2 enthält eine erfindungsgemäße Rollenkette abwechselnd und hintereinander angeordnete Innen- und Außenglieder. Jedes Außenglied umfaßt wenigstens zwei nebeneinander liegende, parallele, platteförmige Außenlaschen 7, die durch wenigstens zwei drehfest an diesen befestigte zylindrische Bolzen 17 auf Abstand gehalten und miteinander verbunden sind, indem die Bolzen 17 beispielsweise in Bolzenlöcher der Außenlaschen 7 ragen und in diesen derart vernietet sind, daß die Kettenbreite dem minimal zulässigen Abstand der Außenlaschen 7 entspricht. Jedes Innenglied enthält wenigstens zwei parallele, nebeneinander liegende, platteförmige Innenlaschen 3, die jeweils zwei Bolzenlöcher 8 aufweisen, die von je einem Bolzen 17 derart durchragt sind, daß je zwei Innenlaschen 3 zwischen je zwei Außenlaschen 7 angeordnet und drehbar auf einem der Bolzen 17 gelagert sind. Bei aufeinander ausgerichteten Innenlaschen 3 weist somit jedes Innenglied 3 zwei Paare von koaxial ausgerichteten, je einen Bolzen 17 aufnehmenden Bolzenlöchern 8 auf. Bei normalen Rollenketten werden die Innenlaschen 3 durch von den Bolzen 17 durchragte Hülsen in einem Abstand gehalten, der kleiner als der Abstand der beiden Außenlaschen 7 ist. Gemäß Fig. 1 und 2 sind diese Hülsen durch jeweils zwei gegenüberliegende, zwischen den Innenlaschen 3 angeordnete Segmente ersetzt, die die Bolzen 17 an zwei im wesentlichen diametral gegenüberliegenden Stellen jeweils teilweise umgreifen. Eines dieser Segmente ist eine mit wenigstens einer der Innenlaschen 3 drehfest verbundene und frei auf dem Bolzen 17 drehbare Lagerschale 18, die ein- oder mehrteilig ausgebildet sein kann und sich mit den Innenlaschen 3 dreht, während das jeweils andere Segment ein auf dem Bolzen 17 angeordnetes Klemmstück 19 ist. Dabei sind die Lagerschalen 18 jeweils auf der die Kettenzugkraft aufnehmenden Seite des Bolzens 17, d.h. bei Betrachtung der Innenlaschen 3 jeweils auf den den benachbarten Außengliedern 7 zugewandten Außenseiten der Bolzen 17, die Klemmstücke 19 dagegen auf deren Innenseiten angeordnet.

Die anhand Fig. 1 und 2 beschriebene Rollenkette besitzt nach einem älteren Vorschlag (WO 86/01270) ein formschlüssig mit dem Bolzen verbundenes Klemmstück. Rollenketten dieser Art eignen sich insbesondere als betriebsketten für Motor- und Fahrräder, sind allerdings aufwendig in der Herstellung. Eine einfacher herstellbare und vor allem für die Anwendung bei Renn- und Tourenrädern mit Kettenschaltung geeignete, erfindungsgemäße Rollenkette wird nachfolgend anhand der Fig. 1 bis 5 näher erläutert.

Die Bolzen 17 sind durchgehend mit zylindrischen Lagerflächen 17a versehen. Die von den Bolzen 17 durchragten Bolzenlöcher 8 der Innenlaschen 3 sind ebenfalls zylindrisch und weisen an ihren äußeren, die Kettenkraft aufnehmenden Rändern je eine der Lagerschalen 18 in Form eines Kragens auf, der z.B. aus dem Material der Innenlaschen 3 ausgezogen ist und aus einem lagerschalenartigen Ansatz mit einer inneren, längs einer Zylinderfläche verlaufenden Lagerfläche 18a (Fig. 1) und einer äußeren, ebenfalls längs einer Zylinderfläche verlaufenden Klemmfläche 18b besteht. Der Umfangswinkel Jeder Lagerschale 18 beträgt vorzugsweise ca. 180°. Die axiale Länge Jeder Lagerschale 18 ist so bemessen, daß der an den Außenseiten gemessene Abstand a (Fig. 2) jedes Paares von Innenlaschen 3 bei in Anlage befindlichen Lagerschalen 18 kleiner als der an den Innenseiten der Außenlaschen 7 gemessene Abstand ist.

Auf den den Lagerschalen 18 gegenüberliegenden Seiten der Bolzen 17 und zwischen den beiden Innenlaschen 3 eines Innengliedes ist jeweils eines der Klemmstücke 19 angeordnet, das glatte, auf einem Kreisring verlaufende Seitenflächen 20 (Fig. 2) aufweist und sich über einen Umfangswinkel zum Bolzen 17 von vorzugsweise ca. 140° erstreckt, so daß es sich um ca. 40° frei um den Bolzen 17 und zwischen den gegenüberliegenden Kanten der Lagerschalen 18 drehen kann. Außerdem weist jedes Klemmstück 19 je eine dem Bolzen 17 bzw. der Rolle 2 zugewandte, zylindrische Klemmfläche 19a bzw. 19b (Fig. 1) auf. Die Lagerschalen 18 und Klemmstücke 19 sind im Übrigen mit gewissem Spiel von den Rollen 2 umgeben, die den Abstand zwischen den Innenlaschen 3 festlegen.

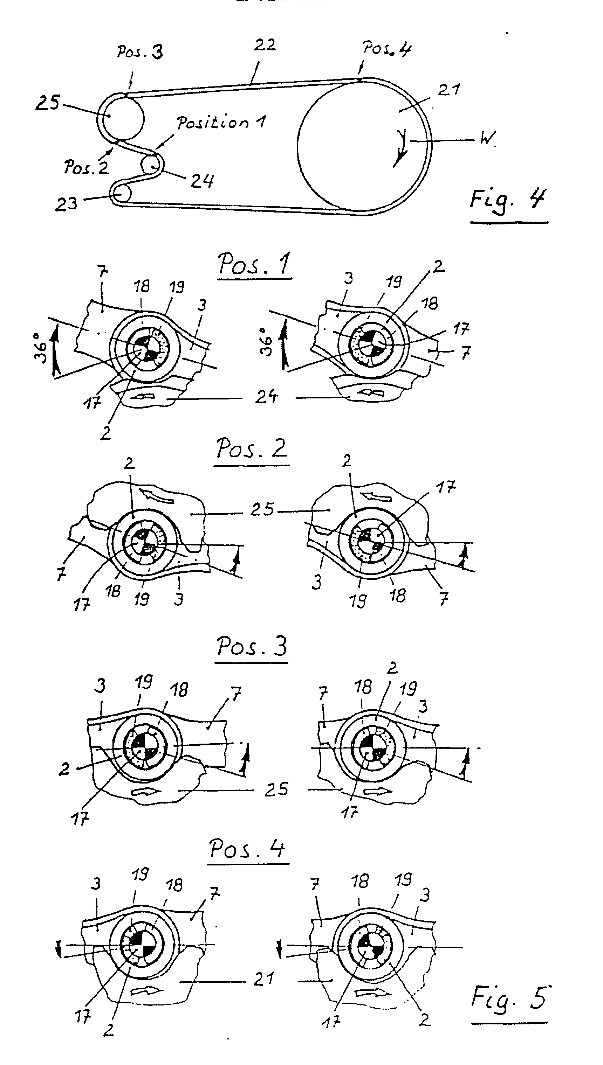

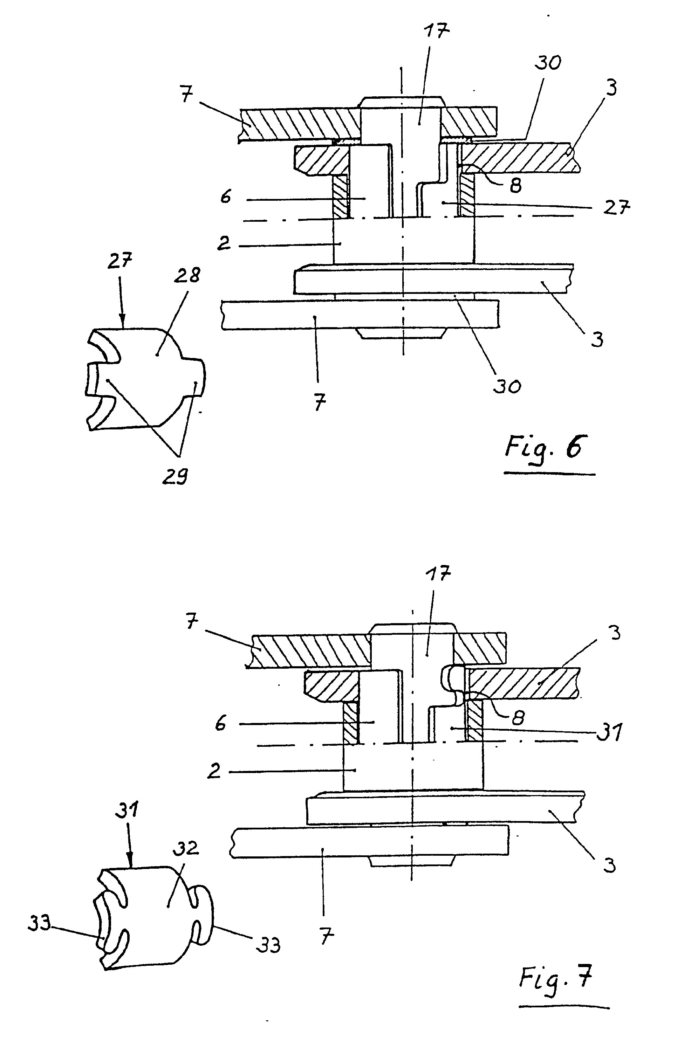

Die Bolzenlöcher 8 der Innenlaschen 3 sind vorzugsweise so groß bemessen, daß das Außenglied mit dem Bolzen 17 größere seitliche Schwenkbewegungen ausüben kann, wie Fig. 2 deutlich zeigt. Dadurch ist ein leichtes Schalten der Rollenkette sichergestellt. Da das Klemmstück 19 frei beweglich bzw. lose in der Rolle 2 angeordnet ist, stellt sich die Lage des Klemmstücks 19 bei den ständigen Wechseln zwischen den Ein- und Ausschwenkvorgängen bei üblichen Gangschaltungen stets selbständig so ein, daß in der Rolle 2 bei denjenigen Ein- und Ausschewenkvorgängen, die bei belasteter Rollenkette auftreten, keine Reibarbeit entstehen kann, wie nachfolgend anhand Fig. 4 und 5 erläutert ist.

Fig. 4 zeigt einen üblichen Kettentrieb für Fahrräder mit Gangschaltung. Dabei treibt ein in Richtung eines Pfeils w mittels einer nicht dargestellten Tretkurbel angetriebenes Kettenrad 21 eine endlose Rollenkette 22 an, die über eine Spannrolle 23, eine Leitrolle 24 und ein vorgewähltes Abtriebsrad 25 eines an einem nicht dargestellten Rad befestigten, aus mehreren Zahnrädern bestehenden Zahnkranzes läuft. Die Leitrolle 24 ist in Achsrichtung verstellbar, um die Kette auf ein anderes Abtriebsrad des Zahnkranzes umzuschalten, und weist in der Regel zehn abgeflachte Zähne, d.h. eine Zahnteilung von 36° auf, so daß die Kettenglieder beim Ein- und Auslauf ebenfalls um 36° ein- oder ausschwenken müssen.

Fig. 5 zeigt das Wechselspiel der Schwenkvorgänge in vier Positionen, die in Fig. 4 mit entsprechenden Positionspfeilen gekennzeichnet sind. Dabei zeigt Fig. 5 in der linken Spalte die Situation bei vorlaufenden Außenlaschen 7 und in der rechten Spalte die Situation bei vorlaufenden Innenlaschen 3. Die hellen Pfeile bezeichnen die Drehrichtungen der verschiedenen Räder und Rollen, die dunklen Pfeile die Schwenkwinkel. Die Bolzen 17 sind durch dunkle und helle Felder in vier Quadranten unterteilt, aus denen sich ihre jeweilige Drehstellung ergibt. Dabei sind die nicht dargestellten Positionen zwischen Pos. 4 und Pos. 1 ohne Bedeutung, weil in diesem Bereich die Kette 22 nur normal gespannt ist und keine Antriebskräfte überträgt.

Beim Ablaufen der Kette von der Leitrolle 24 (Pos. 1) wirken nur vergleichsweise kleine Kräfte auf die Gelenke, nämlich einerseits die in entgegengesetzte Richtungen wirkenden Spannkräfte und die zur Rollenmitte hin gerichteten Stützkräfte. Bei vorlaufenden Außenlaschen 7 (linke Spalte der Fig. 5) findet eine Drehung des Bolzens 17 statt. Die Lage des Klemmstücks ist dabei unbedeutend. Wegen der geringen Kräfte entsteht kein Verschleiß. Bei vorlaufenden Innenlaschen 3 dagegen (rechte Spalte in Fig. 5) drehen sich die Lagerschalen 18 um die Bolzen 17, wodurch der in Fig. 5 untere Spalt zwischen den Lagerschalen 18 und den Klemmstücken 19 je nach vorheriger Lage der Klemmstücke nahezu oder bereits völlig geschlossen wird.

Beim Auflaufen der Kette auf das Abtriebsrad 25 (Pos. 2) werden die auf die Kette wirkenden Spannkräfte durch den in Pos. 2 rechts dargestellten Zahn aufgenommen, wodurch bei vorlaufenden Außenlaschen 7 die Klemmstücke 19 zwischen den Rollen 2 und den Bolzen 17 geklemmt werden. Schwenken nun die nachlaufenden Innenlaschen 3 in das Abtriebsrad 25 ein, dann drehen sich die Lagerschalen 18 um die Bolzen 17. Bei richtiger Stellung der Klemmstücke 19 bleiben diese unverändert. Nehmen sie dagegen zufällig eine ungünstige Lage ein, werden sie durch die anstoßenden Lagerschalen 18 verdreht. Da die wirksamen Kräfte sehr klein sind, findet dadurch kein Verschleiß statt. Bei vorlaufenden Innenlaschen 3 drehen sich beim Einschwenken der Außenlaschen 7 deren Bolzen 17. Dadurch können wegen der geringen Klemmung die Klemmstücke 19 mitgenommen werden, so daß sich der in Pos. 2 untere Spalt zwischen diesen und den Lagerschalen 18 völlig schließt, falls er nicht schon in Pos. 1 geschlossen wurde.

Beim Verlassen des Abtriebsrades 25 (Pos. 3) werden bei vorlaufenden Außenlaschen 7 wiederum die Bolzen 17 gedreht. Da in diesem Bereich die größten Kräfte von der Kette auf das Abtriebsrad 25 bzw. dessen rechten Zahn übertragen werden, sind die Lagerschalen 18 fest zwischen den Rollen 2 und den Bolzen 17 eingeklemmt, während die Klemmstücke 19 freiliegen. Daher kann trotz der Kraftübertragung keine Reibung zwischen den Rollen 2 und den Klemmstücken 19 stattfinden. Allerdings können die Klemmstücke 19 durch die Bolzen 17 geringfügig mitgedreht werden. Bei vorlaufenden Innenlaschen 3 Drehen sich in Pos. 3 die Lagerschalen 18 in Richtung der schwarzen Pfeile. Da sich in Pos. 1 und 2 die unteren Spalte zwischen den Klemmstücken 19 und den Lagerschalen 18 automatisch geschlossen haben, ferner nicht zu erwarten ist, daß sich an dieser Lage zwischen den Pos. 2 und 3 etwas ändert, und in Pos. 3 eine Drehung der Lagerschalen in entgegengesetzter Richtung stattfindet, können sich nun die Lagerschalen 18 frei drehen, da einerseits die Klemmstücke 19 zwar zwischen den Rollen 2 und Bolzen 17 fest eingeklemmt sind, andererseits aber der jetzt unten liegende offene Spalt zwischen den Klemmstücken und den Lagerschalen größer als der Schwenkwinkel ist, so daß die Lagerschalen während des Verschwenkvorgangs nicht gegen die Klemmstücke 19 stoßen können. Auch an dieser Stelle kann somit kein Verschleiß stattfinden.

In Pos. 4 wird mittels des Kettenrades 21 die Antriebakraft auf die Kette übertragen, so daß der in Fig. 5 linke Zahn wirksam wird. Bei vorlaufenden Außenlascchen 7 werden daher die Klemmstücke 19 geklemmt, während sich die Lagerachalen 18 drehen. Da diese Drehung im Vergleich zu der Bolzendrehung in Pos. 3 in entgegengesetzter Richtung verläuft, steht automatisch wiederum ein ausreichend großer freier Spalt zwischen den gegenüberliegenden Kanten der Klemmstücke und Lagerschalen zur Verfügung, um eine Verschwenkung ohne Drehung der Klemmstücke 19 zu ermöglichen. Im ungünstigsten, aufgrund der Betriebsbedingungen aber auch unwahrscheinlichsten Fall könnte es vorkommen, daß die Klemmstücke 19 zwischen den Pos. 3 und 4 aus der Lage, die sie in Pos. 3 eingenommen haben, derart nach oben verschwenkt werden, daß der in Pos. 4 obere Spalt zwischen den Klemmstücken und den Lagerschalen 18 geschlossen ist. In diesem Fall würden die Klemmstücke 19 trotz der Klemmung von den Lagerschalen 18 gedreht. Da die Schwenkwinkel in Pos. 4 jedoch nur etwa 6° bis 10° betragen, bleibt selbst in diesem extrem ungünstigen Fall die Reibung relativ gering. Bei vorlaufenden Innenlaschen 3 schließlich ist die jeweilige Lage der Klemmstücke in Pos. 4 unbedeutend, da sich die Bolzen 17 drehen und die Lagerschalen 18 geklemmt sind.

Aus Fig. 5 folgt somit, daß trotz Anwendung von völlig frei gelagerten Klemmstücken 19 praktisch keine Rollenreibung auftritt, weil aufgrund der besonderen Betriebsbedingungen bei Kettenschaltungen gemäß Fig. 4 stets eine selbsttätige Ausrichtung der Klemmstücke 19 in die erforderliche Lage möglich ist. Außerdem kann die Rollenkette sehr schmal und mit geringem Gewicht gebaut werden, wie es z.B. für Rennräder oder Kettenschaltungen mit einer Vielzahl von Abtriebsrädern 25 erwünscht ist.

Fig. 6 bis 8 zeigen Rollenketten mit zwar reibungs- bzw. kraftschlüssig gehaltenen, aber dennoch beweglich zwischen den Bolzen 17 und Rollen 2 bzw. drehbar auf den Bolzen 17 gehaltenen Klemmstücken. Gleiche Teile sind mit denselben Bezugszeichen versehen.

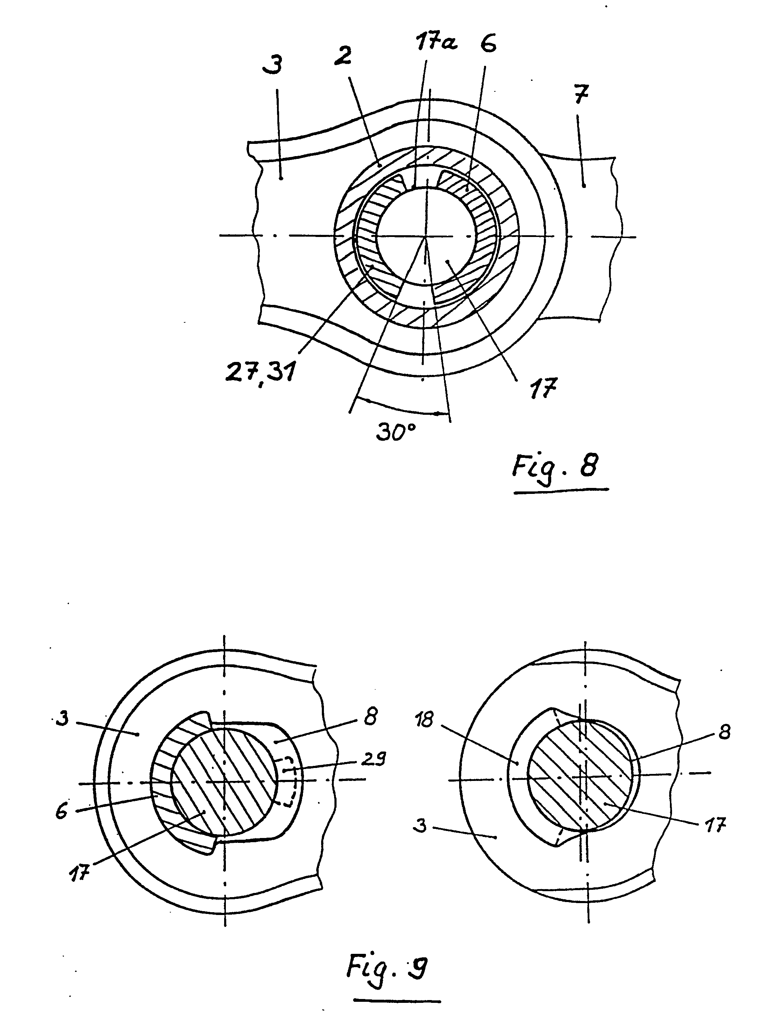

Gemäß Fig. 6 sind vorzugsweise einstückige Lagerschalen 6 vorgesehen, die mit ihren Enden in nach außen gerichteten, entsprechend ihrem Umfangswinkel segmentförmigen Erweiterungen der Bolzenlöcher 8 formschlüssig fixiert sind. Dagegen sind Klemmstücke 27 vorgesehen, die einen etwa entsprechend den Klemmstücken 19 ausgebildeten Abschnitt 28 aufweisen, der mit zwei achssparallelen Verlängerungen 29 versehen ist. Diese Verlängerungen 29 ragen durch erweiterte Abschitte der Bolzenlöcher 8 der Innenlaschen 3 und stützen sich an Reibscheiben 30 ab, die jeweils zwischen den Außen- und Innenlaschen auf die Bolzen 17 aufgezogen sind. Gemäß Fig. 7 sind dagegen Klemmstücke 31 vorgesehen, die zwar ebenfalls einen den Klemmstücken 19 entsprechenden Abschnitt 32 aufweisen, jedoch mit parallel zur Bolzenachse federnden Verlängerungen 33 versehen sind, die sich an den Innenseiten der Außenlaschen 7 abstützen. Daher sind die Klemmstücke 27 und 31 reib- bzw. kraftschlüssig mit den Bolzen 17 bzw. Außenlaschen 7 verbunden, so daß sie sich mit diesen drehen können.

Fig. 8 zeigt diese Kettengelenke in geschnittener Vorderansicht. Dabei ist zu sehen, daß die Klemmstücke 27 bzw. 31 hier mit den Außengliedern um je 30° in beide Richtungen drehen können. Dies entspricht den Schwenkwinkeln beim Ein- bzw. Ausschwenken bei Anwendung eines zwölfzahnigen Kettenrades. Bei weiterer Drehung der Kettenglieder gegeneinander werden die Klemmstücke 27 bzw. 31 von den Lagerschalen 6 aus ihrer Position gedreht. Nach dem Überdrehen der Klemmstücke werden sich diese jedoch durch das Wechselspiel von Ein- und Ausschwenken der Kettenglieder im Betrieb immer wieder auf eine mittlere Position einstellen, so daß auch hier ein grundsätzlich reibungsfreier Lauf der Rollen 2 garantiert werden kann und sich die Lagerreibung ausschließlich auf die Lagerflächen zwischen den Lagerschalen 6 und dem Bolzen 17 beschränkt. Die Reibscheiben 30 können gleichzeitig als Dichtscheiben ausgelegt werden, um somit ein weitgehend wartungsfreies Kettengelenk zu erhalten.

Die Rollenkette mit beweglichen Klemmstücken besitzt alle Vorteile der bereits vorgeschlagenen Rollenketten (WO86/01270), bei denen die Klemmstücke formschlüssig mit den Bolzen verbunden sind. Durch die wegfallende Befestigung der Klemmstücke 19, 27 bzw. 31 bzw. der reibschlüssigen Haltes derselben können zusätzlich die Gelenkbauteile wie z.B. Bolzen und Laschen sehr einfach ausgeführt werden. Die Montage der Kette ist einfacher auszuführen, da sich die Position der Klemmstücke in den Gelenken von selbst im Betrieb richtig einstellt. Die Umfangswinkel der Lagerschalen und Klemmstücke können größer ausgeführt werden, da die Beweglichkeit der Kettenglieder nicht durch einen festen Anschlag Lagerschale-Klemmstück begrenzt ist. Daraus ergeben sich bessere Gelenkpressungswerte und größere zulässige Toleranzwerte für die Herstellung der Teile. Insgesamt ergeben sich für die Rollenkette mit beweglichen Klemmstücken im Vergleich zu bekannten Rollenketten mit festen Klemmstücken neben der uneingeschränkten Kettengliedbeweglichkeit um die Bolzenachse viel einfachere Verhältnisse für die Herstellung und Montage der Bauteile.

Fig. 9 zeigt zwei bevorzugte Ausführungsformen der Bolzenlöcher 8 in den Innenlaschen 3. Im linken Teil der Fig. 9 ist zu sehen, daß das Bolzenloch 8 in seiner rechten Hälfte erweitert ist, um den Verlängerungen 29 genügend Raum für Schwenk- und Drehbewegungen zu geben. In diesem Sonderfall ist das Bolzenloch 8 daher nicht zylindrisch, sondern In dem die Lagerschale 6 aufnehmenden Bereich etwa halbzylindrisch und im übrigen Bereich als eine Art von Langloch ausgebildet. Dabei kann dieses Langloch zur Vermeidung einer Schwächung des Innenglieds 3 nur wenig größer als die Verlängerung 29 bzw. 33 der Klemmstücke 27, 31 ausgebildet sein. Ähnlich ist im rechten Teil der Fig. 9 ein Bolzenloch 8 einer Innenlasche 3 entsprechend Fig. 3 dargestellt, wobei die linke Hälfte wie die Lagerschale 18 einen dem Bolzenradius entsprechenden Radius aufweist, während die rechte Hälfte einen größeren Radius und einen etwas nach rechts versetzten Mittelpunkt besitzt, wobei die beiden zugehörigen Kreise tangential zusammenlaufen. Beide in Fig. 9 dargestellten Ausführungsformen eignen sich besonders für Ketten, bei denen seitliche Auslenkungen erforderlich oder erwünscht sind.

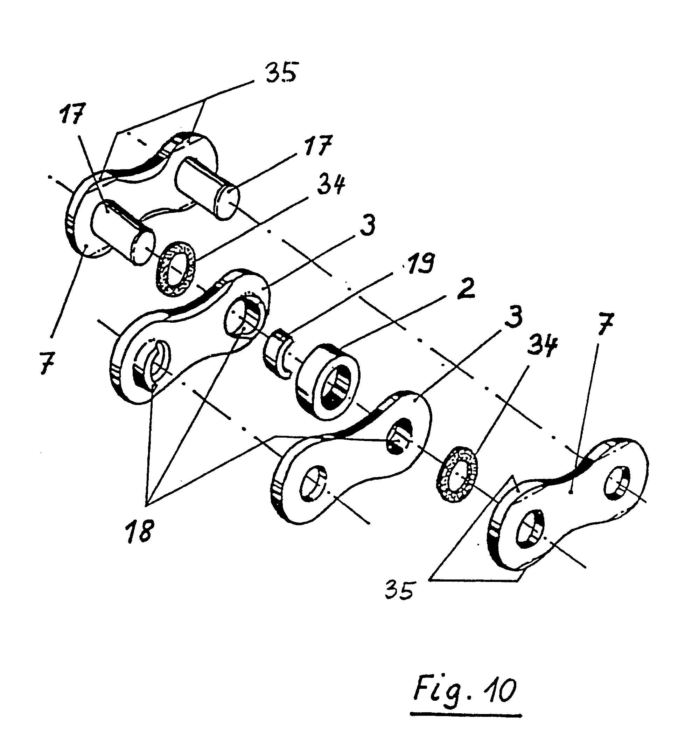

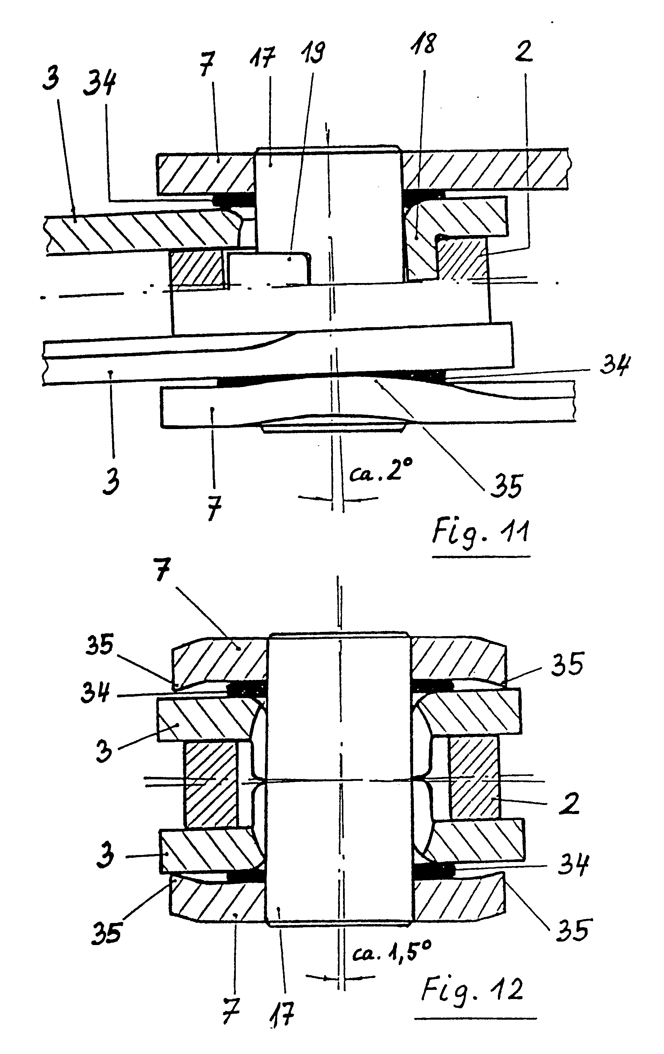

Fig. 10 bis 12, in denen gleiche Teile mit gleichen Bezugszeichen versehen sind, zeigen eine auf einfache Weise abgedichtete Rollenkette nach der Erfindung. Die Abdichtung gegen das Eindringen von Schmutz od. dgl. in die Lagerflächen wird mit Hilfe von Dichtungsringen 34 erzielt, die zwischen den Außen- und Innenlaschen 7 bzw. 3 angeordnet und auf die Bolzen 17 aufgezogen werden. Die Dichtungsringe 34 bestehen vorzugsweise aus einem weichen Material, z.B. einer Gummimischung oder Kunststoff. Um nach dem Zusammenbau der Rollenkette (Fig. 11 und 12) ein zu starkes Zusammenquetschen und damit zu schnelles Verschleißen der Dichtungsringe 34 zu vermeiden, weisen die Außenlaschen nach innen abgewinkelte, vorzugsweise angeformte Ansätze 35 auf, die als Führungen bzw. Abstandhalter für die Innenlaschen 3 dienen. Der Abstand der Innenflächen von zwei gegenüberliegenden Außenlaschen 7 ist jeweils so bemessen, daß sich die vorzugsweise nur an ihren Innenlängskanten und im Bereich von ihren Bolzenlöchern angeordneten Ansätze 35 nach einer geringen Schwenk- bzw. Kippbewegung auf die Außenlächen der Innenlaschen 3 auflegen und dadurch ein weiteres Verschwenken bzw. Verkippen verhindern. Die möglichen Schwenkwinkel, die in Fig. 11 und 12 angegeben sind, stellen nur Beispiele dar, auf die die Erfindung nicht beschränkt ist und die in der Regel für die erwünschte Funktion der Rollenkette ausreichen.

Weitere Vorteile der beschriebenen Rollenketten sind darin zu sehen, daß ihre Bolzen durchweg zylindrisch ausgebildet werden können, die Querschnitte der Bolzenlöcher in den Innen- und Außenlaschen den Querschnitten der Bolzen entsprechen oder diese nur geringfügig übersteigen, so daß keine Stabilitätsverminderung eintritt, daß alle Bauteile konstruktiv einfach herstellbar sind und daß die Breite und damit auch das Gewicht der Rollenkette nicht durch überflüssige Bauteile vergrößert werden.

## Ansprüche

1. Rollenkette für Kettengetriebe mit einer Vielzahl von abwechselnd und hintereinander angeordneten Innen- und Außengliedern, wobei die Außenglieder wenigstens je zwei Außenlaschen (7) enthalten, die durch wenigstens zwei an ihnen befestigten Bolzen (17) miteinander verbunden sind, wobei die Innenglieder wenigstens je zwei Innenlaschen (3) mit zwei Paaren von koaxial ausgerichteten Bolzenlöchern (8) und mit zwischen diesen angeordneten Bolzenlagern aufweisen, die aus drehfest mit den Innenlaschen (3) verbundenen, die Bolzen (17) nur teilweise umgreifenden und bei gestreckter Lage der Rollenkette jeweils auf den den benachbarten Außengliedern (7) zugewandten Seiten der Bolzen (17) angeordneten Lagerschalen (6, 18) und ihnen gegenüberliegenden, zwischen den Innenlaschen (3) angeordneten, die Bolzen (17) ebenfalls nur teilweise umgreifenden Klemmstücken (19, 27, 31) bestehen, die zusammen mit den Lagerschalen (6, 18) die Bolzen (17) insgesamt auf Umfangabschnitten von weniger als 360° umgreifen, so daß sie in Umfangsrichtung relativ zu den Lagerschalen (18) beweglich sind, wobei die Bolzenlager von zwischen den Innenlaschen lose drehbar angeordneten Rollen (2) umgeben sind, wobei zur gelenkigen Verbindung der Außenglieder mit je zwei benachbarten Innengliedern der eine Bolzen jedes Außenglieds eines der Paare von Bolzenlöchern und das zugeordnete Bolzenlager eines der benachbarten Innenglieder und der andere Bolzen jedes Außenglieds eines der Paare von Bolzenlöchern und das zugeordnete Bolzenlager des anderen der benachbarten Innenglieder durchragt, und wobei die zwischen den Bolzen (17) und den Rollen (2) angeordneten Klemmstücke (19, 27, 31) in Umfangsrichtung zwischen den gegenüberliegenden Kanten der Lagerschalen (18) relativ zu den Bolzen (17) beweglich sind.

2. Rollenkette nach Anspruch 1, dadurch gekennzeichnet, daß die Klemmstücke (27, 31) durch Kraftschluß mit den Bolzen (17) und/oder Außengliedern (7) verbunden sind.

3. Rollenkette nach Anspruch 2, dadurch gekennzeichnet, daß die Klemmstücke (27, 31) mit durch die Bolzenlöcher (8) der Innenlaschen (3) ragenden, an den Außenlaschen (7) abgestützten Verlängerungen (29, 33) versehen sind.

4. Rollenkette nach Anspruch 2, dadurch gekennzeichnet, daß zwischen den Innenlaschen (3) und den Außenlaschen (7) auf die Bolzen (17) aufgezogene Reibscheiben (30) angeordnet sind, und daß die Klemmstücke (27) mit durch die Bolzenlöcher (8) der Innenlaschen (3) ragenden, an den Reibscheiben (30) abgestützten Verlängerungen (29) versehen sind.

5. Rollenkette nach Anspruch 2, dadurch gekennzeichnet, daß die Klemmstücke (31) mit in die Bolzenlöcher (8) der Innenlaschen (3) ragenden, parallel zur Bolzenachse federnden Verlängerungen (33) versehen sind, die sich an den Außenlaschen (7) abstützen.

6. Rollenkette nach einem der Ansprüche 1 bis 5, dadurch gekennzeichnet, daß die Lagerschalen (18) über Umfangsabschnitte von etwa 180° und die Klemmstücke (19, 27, 31) über Umfangsabschnitte von etwa 140° bezüglich der Bolzen (17) erstreckt sind.

7. Rollenkette nach einem der Ansprüche 1 bis 6, dadurch gekennzeichnet, daß die Lagerschalen (18) durch je zwei an die Bolzenöffnungen (8) der Innenlaschen (3) angeformten Kragen gebildet sind.

8. Rollenkette nach einem der Ansprüche 1 bis 7, dadurch gekennzeichnet, daß die Lagerschalen (6) einstückig und in entsprechend ihrem Umfangswinkel ausgebildete Erweiterungen in den Bolzenlöchern (8) der Innenlaschen (3) eingesetzt sind.

9. Rollenkette nach einem der Ansprüche 1 bis 8, dadurch gekennzeichnet, daß zwischen den Innen- und Außenlaschen (3, 7) auf die Bolzen (17) aufgezogene Dichtungsringe (34) angeordnet sind.

10. Rollenkette nach Anspruch 9, dadurch gekennzeichnet, daß die Außenlaschen (7) auf ihren Innenseiten mit als Abstandsbegrenzer bei Verschwenkbewegungen wirksamen Ansätzen (35) versehen sind, die die Dichtungsringe (34) zwischen sich aufnehmen.

11. Rollenkette nach einem der Ansprüche 1 und 6 bis 10, dadurch gekennzeichnet, daß die Klemmstücke (19) frei drehbar zwischen den Bolzen (17) und den Rollen (2) gelagert sind.

## Claims

1. A roller chain for chain drives with a plurality of alternating inner and outer links, disposed one behind the other, the outer links having at least two outer lugs (7) each, which are connected together by at least two bolts (17) attached thereto, the inner links having at least two inner lugs (3) each with two pairs of coaxially-oriented bolt apertures (8) and with, disposed therebetween, bolt bearings, which consist of bearing shells (6, 18) non-rotarily connected to the inner lugs (3), only partly encompassing the bolts (17) and, in the stretched position of the roller chain, located in each case on the sides of the bolts (17) facing the adjacent outer links (7), said bolt bearings also consisting of clamp members (19, 27, 31), lying opposite the bearing shells (6, 18) and disposed between the inner lugs (3), likewise only partly encompassing the bolts (17), said clamp members (19, 27, 31), together with the bearing shells (6, 18), encompassing the bolts (17) in all on portions of the periphery of less than 360°, so that they are movable in the circumferential direction relative to the bearing shells (18), the bolt bearings being surrounded by rollers (2) disposed loosely and rotatably between the inner lugs, wherein, in order to provide a flexible connection of the outer links with each pair of adjacent inner links, one bolt of each outer link passes through one of the pairs of bolt apertures and the associated bolt bearing passes through one of the adjacent inner links, and the other bolt of each outer link passes through one of the pairs of bolt apertures and the associated bolt bearing of the other of the adjacent inner links, and wherein the clamp members (19, 27, 31) disposed between the bolts (17) and the rollers (2) are movable in the circumferential direction between the opposite-lying edges of the bearing shells (18) relative to the bolts (17).

2. A roller chain according to Claim 1, characterised in that the clamp members (27, 31) are in a frictional connection with the bolts (17) and/or outer links (7).

3. A roller chain according to Claim 2, characterised in that the clamp members (27, 31) are provided with elongations (29, 33) passing through the bolt apertures (8) of the inner lugs (3) and supported on the outer lugs (7).

4. A roller chain according to Claim 2, characterised in that there are disposed between the inner lugs (3) and the outer lugs (7) friction discs (30) screwed on to the bolts (17), and that the clamp members (27) are provided with elongations (29) passing through the bolt apertures (8) of the inner lugs (3) and supported on the friction discs (30).

5. A roller chain according to Claim 2, characterised in that the clamp members (31) are provided with elongations (33) projecting into the bolt apertures (8) of the inner lugs (3), resilient parallel to the bolt axis, and supported on the outer lugs (7).

6. A roller chain according to one of Claims 1 to 5, characterised in that the bearing shells (18) are extended over circumferential portions of about 180°, and the clamp members (19, 27, 31) are extended over circumferential portions of about 140° relative to the bolts (17).

7. A roller chain according to one of Claims 1 to 6, characterised in that the bearing shells (18) are formed in each case by two collars moulded on to the bolt apertures (8) of the inner lugs (3).

8. A roller chain according to one of Claims 1 to 7, characterised in that the bearing shells (8) are integral and are inset in extensions designed in accordance with their angle at the circumference in the bolt apertures (8) of the inner lugs (3).

9. A roller chain according to one of Claims 1 to 8, characterised in that seal rings (34) screwed on to the bolts (17) are located between the inner and outer lugs (3, 7).

10. A roller chain according to Claim 9, characterised in that the outer lugs (7) are provided on their inner sides with stops (35) acting as distance limiters during pivotal movements, said stops (35) being accommodated between the seal rings (34).

11. A roller chain according to one of Claims 1 and 6 to 10, characterised in that the clamp members (19) are supported freely rotatably between the bolts (17) and the rollers (2).

## Revendications

1. Chaîne à rouleaux pour entraînements à chaînes, comprenant un grand nombre d'éléments intérieurs et extérieurs disposés alternativement les uns derrière les autres, les éléments extérieurs présentant chacun au moins deux éclisses extérieures (7) reliées entre elles par au moins deux boulons (17) fixés sur lesdites éclisses, les éléments intérieurs présentant chacun au moins deux éclisses intérieures (3) avec deux paires de trous de boulon (8) alignés coaxialement et avec des coussinets de boulon disposés entre ceux-ci et constitués de coquilles de coussinet (6, 18) solidaires en rotation avec les éclisses intérieures (3), n'entourant les boulons (17) que de manière partielle et disposées respectivement, dans la position tendue de la chaîne à rouleaux, sur les côtés des boulons (17) dirigés vers les éléments extérieurs (7) voisins, et d'éléments de serrage (19, 27, 31) placés en face desdites coquilles de coussinet, disposés entre les éclisses intérieures (3) et n'entourant également les boulons (17) que de manière partielle, qui, conjointement avec les coquilles de coussinet (6, 18) enveloppent les boulons (17) globalement sur des sections périphériques de moins de 360°, de sorte qu'ils peuvent être déplacés dans le sens circonférentiel par rapport aux coquilles de coussinet (18), les coussinets de boulon étant entourés par des rouleaux (2) pouvant tourner librement entre les éclisses intérieures, la liaison articulée des éléments extérieurs avec respectivement deux éclisses intérieures voisines étant assurée par le fait que l'un des boulons de chaque élément extérieur traverse l'une des paires de trous de boulon et le coussinet de boulon associé de l'un des éléments intérieurs voisins et que l'autre boulon de chaque élément extérieur traverse l'une des paires de trous de boulon et le coussinet de boulon associé de l'autre élément intérieur voisin, et les éléments de serrage (19, 27, 31) disposés entre les boulons (17) et les rouleaux (2) pouvant être déplacés dans le sens circonférentiel entre les bords opposés des coquilles de coussinet (18) par rapport aux boulons (17).

2. Chaîne à rouleaux selon la revendication 1, caractérisée en ce que les éléments de serrage (27, 31) sont reliés par adhérence aux boulons (17) et/ou aux éléments extérieurs (7).

3. Chaîne à rouleaux selon la revendication 2, caractérisée en ce que les éléments de serrage (27, 31) sont munis de prolongements (29, 33) qui traversent les trous de boulon (8) des éclisses intérieures (3) et prennent appui sur les éclisses extérieures (7).

4. Chaîne à rouleaux selon la revendication 2, caractérisée en ce qu'entre les éclisses intérieures (3) et les éclisses extérieures (7) sont disposés des disques de friction (30) engagés sur les boulons (17), et que les éléments de serrage (27) comportent des prolongements (29) qui traversent les trous de boulon (8) des éclisses intérieures (3) et prennent appui sur les disques de friction (30).

5. Chaîne à rouleaux selon la revendication 2, caractérisée en ce que les éléments de serrage (31) sont munis de prolongements (33) qui dépassent dans les trous de boulon (8) des éclisses intérieures (3), rebondissent parallèlement à l'axe du boulon et prennent appui sur les éclisses extérieures (7).

6. Chaîne à rouleaux selon l'une des revendications 1 à 5, caractérisée en ce que les coquilles de coussinet (18) s'étendent sur des sections périphériques d'environ 180° et que les éléments de serrage (19, 27, 31) s'étendent sur des sections périphériques d'environ 140° par rapport aux boulons (17).

7. Chaîne à rouleaux selon l'une des revendications 1 à 6, caractérisée en ce que les coquilles de coussinet (18) sont constituées chacune par deux collets conformés aux trous de boulon (8) des éclisses intérieures (3).

8. Chaîne à rouleaux selon l'une des revendications 1 à 7, caractérisée en ce que les coquilles de coussinet (6) sont insérées en une seule pince dans des élargissements ménagés, conformément à leur angle périphérique, dans les trous de boulon (8) des éclisses intérieures (3).

9. Chaîne à rouleaux selon l'une des revendications 1 à 8, caractérisée en ce que des anneaux d'étanchéité (34) engagés sur les boulons (17) sont disposés entre les éclisses intérieures et extérieures (3, 7).

10. Chaîne à rouleaux selon la revendication 9, caractérisée en ce que les éclisses extérieures (7) sont munies sur leurs faces intérieures de rebords (35) agissant comme limiteurs d'écartement lors de mouvements pivotants et reçoivent entre elles les anneaux d'étanchéité (34).

11. Chaîne à rouleaux selon l'une des revendications 1 et 6 à 10, caractérisée en ce que les éléments de serrage (19) sont montés entre les boulons (17) et les rouleaux (2) de façon à pouvoir tourner librement.

Fig. 1

Fig. 2

Fig. 3

Fig. 4

Pos. 1

Pos. 2

Pos. 3

Pos. 4

Fig. 5

*Fig. 6*

*Fig. 7*

Fig. 8

Fig. 9

Fig. 10

*Fig. 11*

*Fig. 12*